# EUROPÄISCHE PATENTANMELDUNG

(11) **EP 4 391 720 A2**
(43) Veröffentlichungstag der Anmeldung: **26.06.2024**
(21) Anmeldenummer: 23216152.1
(22) Anmeldetag: 13.12.2023
(51) Int. Cl.: H05B 3/06, H05B 3/50

(54) **ELEKTRISCHE HEIZVORRICHTUNG**

(30) Priorität: 21.12.2022 DE 102022134382
(71) Anmelder: Eberspächer catem GmbH & Co. KG, 76863 Herxheim (DE); Eberspächer catem Hermsdorf GmbH & Co. KG, 07629 Hermsdorf (DE)
(72) Erfinder: Salahub, Daniil, 76669 Bad Schönborn (DE); Werner, Patrick, 67141 Neuhofen (DE); Kröner, Timo, 76761 Rülzheim (DE); Herzig, Sascha, 76887 Bad Bergzabern (DE); Feustel, Jan-Michael, 07381 Bodelwitz (DE)
(74) Vertreter: Grünecker Patent- und Rechtsanwälte PartG mbB

(57) **Zusammenfassung**

Die vorliegende Erfindung betrifft eine elektrische Heizvorrichtung umfassend ein Gehäuse (2) mit einer Trennwand (4), die eine Anschlusskammer (10) von einer Heizkammer (8) zur Abgabe von Wärme an ein zu erwärmendes Medium trennt und von der zumindest ein Heizeinrichtungsgehäuse (6) in Richtung auf die Heizkammer (8) abragt, das eine Aufnahmetasche (12) ausbildet, in der zumindest ein PTC-Element (14) und zur Bestromung des PTC-Elementes (14) mit unterschiedlicher Polarität mit diesem elektrisch leitend verbundene Leiterbahnen (16), die in der Anschlusskammer (10) elektrisch angeschlossen sind, isoliert abgestützt sind. Zur verbesserten Auskopplung der von den PTC Element erzeugten Wärme wird ein metallisches Ausgleichselement (32) vorgeschlagen, das U-förmig mit einander gegenüberliegenden Schenkeln (36) und einem die Schenkel (36) verbindenden Steg (30) ausgebildet ist, wobei einander zugewandte Innenflächen (38) der Schenkel (36) plan sind und das PTC-Element (14) zwischen sich einschließen und die Außenflächen (42) der Schenkel (36) unmittelbar an Innenflächen (50) des Heizeinrichtungsgehäuses (6) anliegen.

## Beschreibung

Die vorliegende Erfindung betrifft eine elektrische Heizvorrichtung umfassend ein Gehäuse mit einer Trennwand, die eine Anschlusskammer von einer Heizkammer zur Abgabe von Wärme an ein zu erwärmendes Medium trennt und von der zumindest ein Heizeinrichtungsgehäuse in Richtung auf die Heizkammer abragt. Dieses Heizeinrichtungsgehäuse bildet eine Aufnahmetasche aus, in der zumindest ein PTC-Element und elektrisch leitend mit diesem verbundene Leiterbahnen vorgesehen sind, die in der Anschlusskammer elektrisch angeschlossen sind. Die Leiterbahnen dienen der Bestromung des PTC-Elementes mit unterschiedlicher Polarität. So wird der Leistungsstrom zum Betrieb des PTC-Elementes über die Anschlusskammer dem PTC-Element zugeleitet. Das zumindest eine PTC-Element und die Leiterbahnen sind in der Aufnahmetasche isoliert abgestützt. Die isolierende Abstützung kann beispielsweise durch isolierende Platten erfolgen, die an der Außenseite der Leiterbahnen gegen diese flächig anliegen.

Eine solche elektrische Heizvorrichtung ist beispielsweise aus EP 1 872 986 A1 bekannt.

Für einen Betrieb des PTC-Elementes mit gutem Wirkungsgrad ist es notwendig, die von dem PTC-Element erzeugte Wärme möglichst gut zu beiden Seiten der Hauptseitenflächen des PTC-Elementes auszuleiten. Das PTC-Element ist üblicherweise und bevorzugt auch bei der Erfindung quaderförmig ausgebildet. Die Hauptseitenflächen sind diejenigen Seitenflächen des Quaders mit der größten flächigen Erstreckung. Diese Hauptseitenflächen sind üblicherweise und bevorzugt auch bei der Erfindung durch einen umlaufenden Rand des PTC-Elementes miteinander verbunden, der sich üblicherweise rechtwinklig zu den Hauptseitenflächen erstreckende Randflächen hat. Die Fläche einer jeden Hauptseitenfläche ist üblicherweise zumindest um den Faktor 5 größer als die Fläche einer der Randflächen.

Aus dem zuvor genannten Stand der Technik ist es bekannt, auf der einen Seite des PTC-Elementes ein Keilelement in die Aufnahmetasche einzuschieben, um das PTC-Element, die Leiterbahnen und die Isolierlage in der Aufnahmetasche zu verspannen, sodass von dem PTC-Element erzeugte Wärme gut und beidseitig auf die Innenfläche der Aufnahmetasche übertragen werden und durch diese hindurch an die Außenseite geleitet werden kann. Das Heizeinrichtungsgehäuse bildet dort wie auch bei der vorliegenden Erfindung bevorzugt eine Art Heizrippe aus, die in die Heizkammer hineinragt.

Die PTC-Elemente sind in der Regel auch bei der Erfindung gesinterte Keramiksteine, die auf ihren Hauptseitenflächen üblicherweise zur Einleitung des Leistungsstromes in das PTC-Element mit einer Metallisierung versehen sind. Diese keramischen Bauteile sind spröde und bruchanfällig. Entsprechendes gilt für die Isolierlage, sofern diese aus einer Keramikplatte gebildet wird. Die Verwendung einer Aluminiumoxid-Platte ist durchaus gängig zur isolierenden Abstützung des PTC-Elementes gegenüber der Innenfläche des Heizeinrichtungsgehäuse. Zur Erhöhung der elektrischen Sicherheit sind typischerweise auf beiden Seiten entsprechende Isolierlage vorgesehen. Es gibt Vorschläge, diese keramischen Platten zusätzlich mit einer elektrischen isolierenden Folie zu versehen, um bei einem etwaigen Bruch der Keramikplatte eine gewisse elektrische Isolierung gegenüber dem metallischen Heizeinrichtungsgehäuse zu bewahren.

Eine elektrische Heizvorrichtung der eingangs genannten Art werden heute vermehrt aufgrund der Elektromobilität mit höheren Strömen von 48 Volt und mehr betrieben. Mitunter werden die elektrischen Heizvorrichtungen mit einem Leistungsstrom von mehreren 100 Volt betrieben. Entsprechend angepasst müssen die Maßnahmen für die elektrische Sicherheit und Durchschlagsfestigkeit sein.

Aus EP 3 101 365 A1 ist es bekannt, zu dem Keilelement ein Gleitblech an der Außenseite einer Isolierlage vorzusehen, sodass das in die Aufnahmetasche geschobene Keilelement nicht unmittelbar an einer Isolierlage vorbeigleitet, sondern auf der Oberfläche des Gleitblechs entlang gleitet.

Den vorgenannten Vorschlägen ist das Problem gemein, dass das PTC-Element in einer Querschnittsansicht im Grunde unsymmetrisch in die Aufnahmetasche eingebracht ist. Auf der einen Seite kann eine Isolierlage unmittelbar gegen die Innenfläche des Heizeinrichtungsgehäuse anliegen, und auf der gegenüberliegenden Seite erfolgt die Anlage üblicherweise unter Zwischenlage des Keilelementes gegebenenfalls des Gleitblechs. So ergibt sich ein Wärmeleitweg von dem PTC-Element bis zu der jeweiligen Außenfläche des Heizeinrichtungsgehäuse mit unterschiedlicher Dicke und abweichender Wärmeleitfähigkeit.

Der vorliegenden Erfindung liegt das Problem zugrunde, eine Lösung anzugeben, die eine verbesserte Auskopplung, der von den PTC Element erzeugten Wärme ermöglicht.

Zur Lösung dieses Problems wird eine elektrische Heizvorrichtung der eingangs genannten Art durch ein metallisches Ausgleichselement weitergebildet, das U-förmig mit einander gegenüberliegenden Schenkeln und einem die Schenkel verbindenden Steg ausgebildet ist. Einander zugewandte Innenflächen der Schenkel sind plan, also eben. Diese Innenflächen schließen das PTC-Element zwischen sich ein. Die Außenflächen der entsprechenden Schenkel liegen unmittelbar an den zuvor erwähnten Innenflächen des Heizeinrichtungsgehäuse an.

Das U-förmige Ausgleichselement ist üblicherweise aus einem endlosen Metallprofil durch Schneiden eines extrudierten Profils auf Länge gebildet. Regelmäßig wird das U-förmige Ausgleichselement als aus einem Profilstück geschnittenes Bauteil ohne Nachbearbeitung verwendet. So bleiben die Stirnseiten des U-förmigen Profilelementes üblicherweise frei. Das in dem Ausgleichselement aufgenommenen PTC-Element kann mit gleicher Breite wie das Ausgleichselement vorgesehen sein, sodass das PTC-Element bündig mit dem Ausgleichselement in Breitenrichtung endet. In Höhenrichtung, die sich quer zu der Breitenrichtung und sich üblicherweise rechtwinklig zu der im wesentlichen ebenen Trennwand erstreckt, ist das PTC-Element typischerweise innerhalb des Ausgleichselementes vollständig aufgenommen. Lediglich Anschlussfahnen zu den Leiterbahnen, die üblicherweise durch Freistanzen von freien Enden der die Leiterbahnen ausbildenden Kontaktbleche ausgeformt sind, überragen üblicherweise das Ausgleichselement in Höhenrichtung und sind über die Trennwand hinaus bis in die Anschlusskammer geführt.

Da das Ausgleichselement für sich eine bauliche Einheit darstellt, kann das PTC-Element, die elektrisch damit verbundenen Leiterbahnen und etwaige Isolierschichten zunächst in dem metallischen Ausgleichselement vormontiert werden. In dieser Weise geschützt kann das Heizeinrichtungsgehäuse durch Einbringen des bestückten Ausgleichselementes mit den die wärmeerzeugenden Elementen der elektrischen Heizvorrichtung versehen werden. So ergibt sich bereits im Rahmen der Montage ein verbesserter Schutz des PTC-Elements bzw. der Isolierschicht. Da die planen Innenflächen der sich gegenüberliegenden Schenkel plan an dem PTC-Element anliegen und die Innenflächen das mindestens eine PTC-Element zwischen sich aufnehmen, ist das PTC-Element in dem Ausgleichselement geschützt und auch dann gleichmäßig mechanisch auf Druck beansprucht, wenn beim Einbringen des Ausgleichselementes dieses innerhalb des Heizeinrichtungsgehäuse mit Druck beaufschlagt bzw. verspannt wird. Eine solche Verspannung ist zu bevorzugen, da zumindest in dem zu bevorzugenden Fall, bei dem die sich gegenüberliegenden Schenkeln in einer Querschnittsansicht des Ausgleichselements symmetrisch ausgebildet sind, das PTC-Element in Bezug auf die Wärmeauskopplung über die Hauptseitenflächen mittig in dem Heizeinrichtungsgehäuse angeordnet ist und einzelne Lagen der Schichtung innerhalb des Ausgleichselementes zunächst nur lose gegeneinander anliegen. So kann die Auskopplung der von dem PTC-Element erzeugten Wärme zu beiden Hauptseiten in gleicher Weise erfolgen.

Wie zuvor erwähnt, ist das Ausgleichselement bevorzugt ein auf Länge geschnittenes Profilteil, insbesondere ein Strangpressprofilteil aus stranggepresstem Aluminium oder einer Aluminiumlegierung. In dieser Weise lässt sich das Ausgleichselement wirtschaftlich und skalierbar vorbereiten.

Gemäß einer bevorzugten Weiterbildung der vorliegenden Erfindung sind die Außenflächen der Schenkel in einer Querschnittsansicht des U-förmigen Ausgleichselementes abschnittsweise konvex geformt. In der Querschnittsansicht wird das PTC-Element quer zu seinen Hauptseitenflächen geschnitten. Die konvexe Ausgestaltung verbessert die mechanische Verspannung des Ausgleichselementes in dem Heizeinrichtungsgehäuse und damit zum einen den Wärmeaustrag durch Wärmeleitung und zum anderen eine solide elektrische Kontaktierung zwischen den bevorzugt als Blechen zunächst lose in das Ausgleichselement eingebrachten Leiterbahnen und der zugeordneten Metallisierung der Hauptseitenflächen des PTC-Elementes. Dabei ist der konvexe gekrümmte Bereich üblicherweise über zumindest 60 % der Höhenerstreckung des bzw. der PTC-Elemente ausgebildet, bevorzugt durchgängig ballig, was auch bedeuten kann, dass sich mehrere konvex gekrümmte Vorsprünge unmittelbar einander anschließen. Die konvexe Krümmung hat einen Radius von zwischen 400 Millimeter und 2000 Millimeter, bevorzugt nicht mehr als 1200 mmm.

Jede Außenfläche kann in einer Querschnittsansicht mehrere konvexe Krümmungen aufweisen. Bevorzugt hat jede Außenfläche der Schenkel in einer Querschnittsansicht des U-förmigen Ausgleichselementes zumindest zwei konvexe Wölbungen der oben genannten Art.

Zusätzlich oder ergänzend können an der Außenfläche der Schenkel sich quer zur Höhenrichtung erstreckende Rillen und dazwischen vorgesehene Vorsprünge vorgesehen sein. Eine solche gerändelte Ausgestaltung kann ebenfalls zu verbesserten Verspannung des Ausgleichselementes in dem Heizeinrichtungsgehäuse beitragen. Die konvexen Wölbungen können relativ dünnwandig bzw. so ausgebildet sein, dass sich diese beim Einpressen des Ausgleichselementes in dem Heizeinrichtungsgehäuse verformen und sich plastisch verformt an die Innenfläche der Aufnahmetasche anlegen. Damit ist ein Beispiel einer denkbaren Kaltverschweißung beschrieben, die bevorzugt zwischen dem Ausgleichselement und dem metallischen Heizeinrichtungsgehäuse stattfindet, um beide Bauteile möglichst gut wärmeleitend miteinander zu verbinden. Aber auch die konvex geformte Krümmung kann zu einer entsprechenden Kaltverschweißung zwischen dem Ausgleichselement und dem Heizeinrichtungsgehäuse führen. Das Verhältnis von lichtem Abstand der einander gegenüberliegenden Innenflächen des Heizeinrichtungsgehäuse zu dem minimal möglichen Abstand der Außenflächen der Schenkel sollte so gewählt werden, dass das Ausgleichselement eine gewisse Einpresskraft erfordert, um in das Heizeinrichtungsgehäuse eingebracht zu werden.

Zur verbesserten Positionierung des PTC-Elementes innerhalb des Heizeinrichtungsgehäuse bei möglichst geringem Materialeinsatz wird vorgeschlagen, an der Außenseite des Steges zumindest einen Positioniersteg vorzusehen, der den Steg außen überragt und der linienförmig gegen einen Boden des Heizeinrichtungsgehäuse angelegt werden kann. Die Länge des Positioniersteges ist bevorzugt so gewählt, dass bei in dem Heizeinrichtungsgehäuse eingebrachtem Ausgleichselement das PTC-Element an der für die Wärmeauskopplung bestmöglichen Position zum liegen kommt.

Gemäß einer bevorzugten Weiterbildung der vorliegenden Erfindung ist zwischen dem Steg und den Innenflächen der Schenkel jeweils ein gegenüber den Innenflächen nach außen vorspringender Freistich ausgebildet. So verspringen die einander gegenüberliegenden Innenflächen der Schenkel im Bereich des Steges nach außen. Dadurch hat das Ausgleichselement einen verjüngten Bereich benachbart zu dem Steg, der eine gewisse Verschwenkbewegung der Schenkel zueinander erlaubt, die im Hinblick auf das Bestücken des Ausgleichselementes und das Einbringen in das Heizeinrichtungsgehäuse zu bevorzugen ist. Auch wird eine zu dem Steg hin definiert begrenzte Innenfläche zur Anlage des bzw. der PTC-Elemente durch die Schenkel ausgebildet, was die Wärmeauskopplung über die Innenfläche begünstigen kann.

Bevorzugt sind die Schenkel zumindest auf Höhe des PTC-Elementes in Dickenrichtung identisch ausgebildet.

Im Hinblick auf ein eine lagegenaue Abstützung des PTC-Elementes relativ zu dem Steg ist vorzugsweise ein Rahmen vorgesehen, in dem das zumindest eine PTC-Element aufgenommen ist. Der Rahmen fügt die Leiterbahnen ausformende Kontaktbleche sowie ggf. auch eine optional an einer Außenseite zumindest eines der Kontaktbleche angeordnete Isolierlage zu einer Einheit. Der untere Querholm des Rahmens überragt bevorzugt den Freistich und positioniert so das PTC-Element sicher auf eine Höhe, auf der sich bereits die plane Innenfläche der Schenkel befindet. Wie üblich hat der Rahmen eine geringere Dicke als das PTC-Element, sodass die Kontaktbleche vollflächig an dem PTC-Element anliegen, gleichwohl aber den Rahmen ganz oder teilweise überragen können. Bevorzugt nehmen die Kontaktbleche zumindest einen Teil des Rahmens wie auch des mindestens einen PTC-Elements zwischen sich auf. Auch die Isolierlage kann durch den Rahmen zu einer Einheit mit den Kontaktblechen und dem zumindest einen PTC-Element geformt sein. Etwaige, die Isolierlage außenseitig überdeckende Bestandteile des Rahmens können außerhalb des Ausgleichselementes vorgesehen sein, wie auch der Rahmen selbst.

Alternativ oder ergänzend kann eine oberer Querholm des Rahmens, der sich üblicherweise parallel zu dem Steg erstreckt, die Aufnahmetasche in Richtung auf die Anschlusskammer überragen. Ein solcher Querholm kann beispielsweise genutzt werden, um eine gewisse Drucckraft auf das bestückte Ausgleichselement auszuüben, um dieses gegen den Widerstand einer Verformung auf Seiten des Ausgleichselementes und/oder des Heizeinrichtungsgehäuse in das Heizeinrichtungsgehäuse einzudrücken, ohne dabei eine erhebliche mechanische Beanspruchung auf das PTC-Element und gegebenenfalls die Isolierlage selbst ausüben zu müssen. Ein Einbringwerkzeug kann unmittelbar auf den oberer Querholm des Rahmens einwirken.

Der Rahmen kann auch Längsholme aufweisen, die sich in Höhenrichtung und damit ein Einbringrichtung des Ausgleichselementes in das Heizeinrichtungsgehäuse erstrecken. Diese Längsholme können das Ausgleichselement zwischen sich aufnehmen. So haben die Längsholme eine Breite, die größer ist als der Abstand der einander gegenüberliegenden Innenflächen der Schenkel, jedoch kleiner als der Abstand der Außenflächen der Schenkel. So ist der Rahmen und damit das PTC-Element in vorbestimmter Weise über die Längsholme zwischen den freien Rändern des Ausgleichselementes und dementsprechend in dem Ausgleichselement in Breitenrichtung angemessen positioniert.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1:: eine perspektivische, teilweise geschnittene Darstellung der wesentlichen Bestandteile einer elektrischen Heizvorrichtung;
- Figur 2:: eine Stirnseitenansicht eines Ausgleichselementes des Ausführungsbeispiels nach Figur 1;
- Figur 3: eine anschlusskammer-seitige Draufsicht auf die Trennwand;
- Figuren 4a-c:: perspektivische Seitenansichten von Außenflächen unterschiedlich gestalteter Ausgleichselemente und
- Figur 5:: eine perspektivische Seitenansicht eines bestückten Ausgleichselementes.

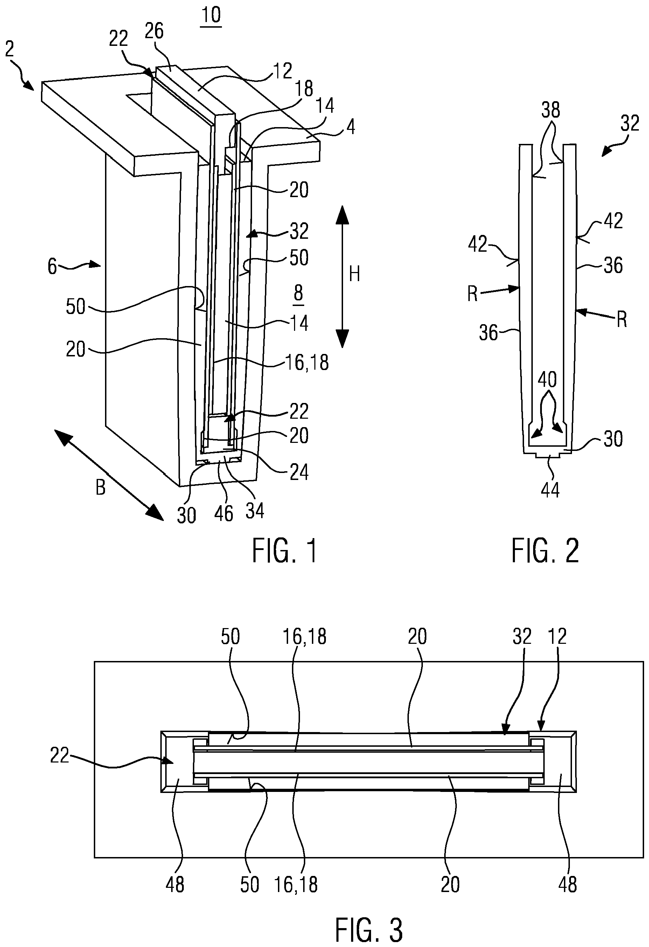

Die Figur 1 zeigt Teile eines Gehäuses 2 einer nicht näher dargestellten elektrischen Heizvorrichtung, die gemäß EP 1 872 986 A1 oder gemäß 10 2019 216 481 A1 ausgebildet sein kann. Konkret gezeigt ist eine Trennwand 4, von der ein Heizeinrichtungsgehäuse 6 abragt, welches nach Art einer Heizrippe in eine mit Bezugszeichen 8 gekennzeichnete Heizkammer von der Trennwand 4 vorspringt und nur zu einer Anschlusskammer 10 offen ist. Mit H ist die Höhenrichtung abgetragen; mit B die Breitenrichtung. Die dritte Richtung in einem kartesischen Koordinatensystem sei die Dickenrichtung.

In einer durch das Heizeinrichtungsgehäuse 6 gebildeten Aufnahmetasche 12 ist ein PTC-Element 14 aufgenommen, an dessen sich in Breiten- und Höhenrichtung erstreckenden Hauptseitenflächen als Leiterbahnen 16 Kontaktbleche 18 sowie als Isolierlagen 20 Aluminiumoxidplatten aufgenommen sind. Die Isolierlagen 20 überdecken in Höhenrichtung jeweils einen Rahmen 22.

In Figur 1 ist mit Bezugszeichen 24 ein unterer Querholm des Rahmens 22 eingezeichnet. Bezugszeichen 26 kennzeichnet einen oberen Querholm des Rahmens 22, der die Trennwand 4 in Richtung auf die Anschlusskammer 10 überragt. Der untere Querholm 24 liegt gegen einen durch einen Steg 30 eines Ausgleichselementes 32 gebildeten Boden 34 des Ausgleichselementes 32 an. Das Ausgleichselement 32 hat einander gegenüberliegende Schenkel 36, die von dem Steg 30 abgehen. Die Schenkel 36 haben plane einander gegenüberliegende Innenflächen 38. Zwischen diesen Innenflächen 38 und dem Steg 30 ist nahe an dem Boden 34 jeweils ein nach außen vorspringender Freistich 40 vorgesehen. Relativ zu diesen Freistich 40 springen dementsprechend die Innenflächen 38 der Schenkel 36 nach innen vor. An diesen Innenflächen 38 liegen die jeweiligen Isolierlagen 20 unmittelbar an, wobei diese Isolierlagen 20 den unteren Querholm 24 und den oberen Querholm 26 jeweils zumindest teilweise überdecken.

Ersichtlich ist der untere Querholm 24 an seinem freien Ende T-förmig ausgebildet und formt einen unteren Anschlag für die Isolierlagen 20 aus, durch den die Isolierlagen 20 unterseitig relativ zu dem Rahmen 22 positioniert sind.

Wie den Figuren 1 und 2 zu entnehmen ist, sind mit Bezugszeichen 42 gekennzeichnete Außenflächen der Schenkel 36 konvex gekrümmt. Die Krümmung hat einen Radius von zwischen 400 mm und 2000 mm, bevorzugt von zwischen 600 mm und 1200 mm.

Figur 2 verdeutlicht auch einen an der Außenseite des Steges 30 vorgesehenen Positioniersteg 44. Dieser Positioniersteg 44 liegt an einem Boden 46 des Heizeinrichtungsgehäuse 6 an.

Wie sich aus Figur 3 ergibt, hat der Rahmen 22 Längsholme 48, die dicker als die Schichtung aus dem PTC-Element 14, den Leiterbahnen 16 und den Isolierlage 20 jedoch schmaler als der Abstand der Außenflächen 42 der Schenkel 36 ist. So nehmen die Längsholme 48 das Ausgleichselement 32 zwischen sich auf und positionieren dieses relativ zu dem Rahmen 22. Die Breite der Aufnahmetasche 12 ist dimensional so an die Breite des Rahmens 22 angepasst, dass der Rahmen 22 mit wenig Spiel in Breitenrichtung B in der Aufnahmetasche 12 aufgenommen ist.

Bezugszeichen 50 kennzeichnet einander gegenüberliegende metallische Innenflächen des Heizeinrichtungsgehäuse 6. An diesen Innenflächen 50 liegen die Außenflächen 42 der Schenkel 36 unter Vorspannung an.

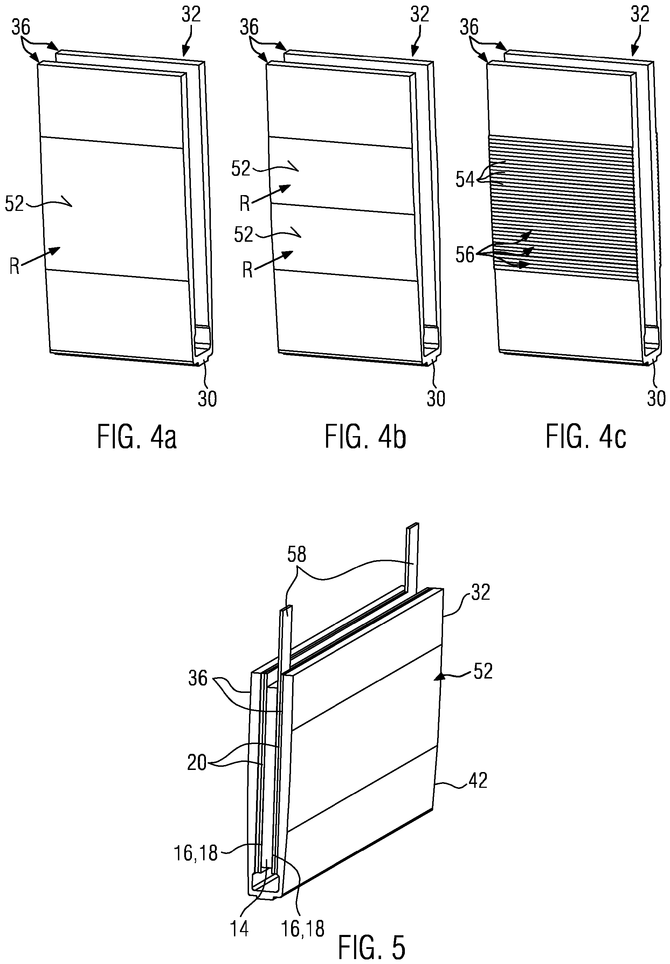

Die Figuren 4a bis c verdeutlichen denkbare Ausgestaltungen für eine gute wärmeleitende Kontaktierung, insbesondere in Form einer Kaltverschweiß-Verbindung zwischen dem Ausgleichselement 32 und den Innenflächen 50.

Figur 4a verdeutlicht dabei eine Gestaltung entsprechend Figur 2 mit einer einzigen Wölbung 52, die einen gleichmäßigen konvexen Radius R vorliegend von etwa 800mm hat.

Bei dem Ausführungsbeispiel gemäß Figur 4b sind zwei solcher Wölbungen 52 unmittelbar benachbart zueinander vorgesehen. Diese beiden Wölbungen 52 stoßen in etwa auf mittlerer Höhe des PTC-Elementes 14 unmittelbar aneinander an. Diese Wölbungen 52 haben einen Radius R= 400 mm.

Das Ausführungsbeispiel gemäß Figur 4c verdeutlicht eine gerändelte Gestaltung an der Außenfläche 42 der Schenkel 36. Diese Ausgestaltung hat sich quer erstreckende Rillen 54, die sich mit Vorsprüngen 56 abwechseln. Beim Einschieben des Ausgleichselementes 52 in die Aufnahmetasche 12 können die Vorsprünge 56 in Richtung auf die Rillen 54 und in diese hinein verformt werden.

Figur 5 verdeutlicht die freien Enden des Ausgleichselementes 32, welche vorliegend bündig mit den Enden des PTC-Elementes 14 in Breitenrichtung B enden. Figur 5 verdeutlicht die Anordnung des PTC-Elementes 14 in einem Ausgleichselement 32 gemäß Figur 4a. Gezeigt sind ferner Anschlussfahnen 58, die in der Anschlusskammer 10 elektrisch angeschlossen sind, wie dies grundsätzlich aus EP 10 2019, 216 481 A1 bekannt ist.

Zur Montage des in Figur 1 gezeigten Ausführungsbeispiels wird das Ausgleichselement 32 zunächst bestückt. Ein mit dem PTC-Element 14 und den Leiterbahnen 16 versehener Rahmen 22 wird zusammen mit den beidseitig außen zu den Leiterbahnen 16 vorgesehenen Isolierlagen 20 zwischen die Schenkel 36 des Ausgleichselementes 32 eingeschoben, bis der untere Querholm 24 gegen den Boden 34 des Ausgleichselementes 32 anstößt.

In dieser Weise vorbereitet wird das bestückte Ausgleichselement 32 in die Aufnahmetasche 12 eingebracht. Dies erfolgt unter Zuhilfenahme eines Einpresswerkzeugs, welches gegen den oberen Querholm 26 wirkt und über diesen Querholm 26 den Rahmen in Richtung auf den Boden 46 des Heizeinrichtungsgehäuse 6 drängt. Dabei werden die Außenflächen 42 der Schenkel 36 üblicherweise verformt. Es ergibt sich eine Kaltverschweißung zwischen dem Material des Ausgleichselementes 32 und den Innenflächen 50 des Heizeinrichtungsgehäuse 6. Die Einbringbewegung findet ihr Ende, wenn der Positioniersteg 44 an den Boden 46 des Heizeinrichtungsgehäuse 6 anstößt.

### Bezugszeichenliste

- 2: Gehäuse
- 4: Trennwand
- 6: Heizeinrichtungsgehäuse
- 8: Heizkammer
- 10: Anschlusskammer
- 12: Aufnahmetasche
- 14: PTC-Element
- 16: Leiterbahn
- 18: Kontaktblech
- 20: Isolierlage
- 22: Rahmen
- 24: unterer Querholm
- 26: oberer Querholm
- 30: Steg
- 32: Ausgleichselementes
- 34: Boden
- 36: Schenkel
- 38: Innenfläche des Schenkels
- 40: Freistich
- 42: Außenfläche des Schenkels
- 44: Positioniersteg
- 46: Boden
- 48: Längsholm
- 50: Innenfläche
- 52: Wölbung
- 54: Rille
- 56: Vorsprung
- 58: Anschlussfahne
- B: Breitenrichtung
- H: Höhenrichtung
- R: Radius

## Patentansprüche

1. Elektrische Heizvorrichtung umfassend ein Gehäuse (2) mit einer Trennwand (4), die eine Anschlusskammer (10) von einer Heizkammer (8) zur Abgabe von Wärme an ein zu erwärmendes Medium trennt und von der zumindest ein Heizeinrichtungsgehäuse (6) in Richtung auf die Heizkammer (8) abragt, das eine Aufnahmetasche (12) ausbildet, in der zumindest ein PTC-Element (14) und zur Bestromung des PTC-Elementes (14) mit unterschiedlicher Polarität mit diesem elektrisch leitend verbundene Leiterbahnen (16), die in der Anschlusskammer (10) elektrisch angeschlossen sind, isoliert abgestützt sind,
**gekennzeichnet durch,**
ein metallisches Ausgleichselement (32), das U-förmig mit einander gegenüberliegenden Schenkeln (36) und einem die Schenkel (36) verbindenden Steg (30) ausgebildet ist, wobei einander zugewandte Innenflächen (38) der Schenkel (36) plan sind und das PTC-Element (14) zwischen sich einschließen und die Außenflächen (42) der Schenkel (36) unmittelbar an Innenflächen (50) des Heizeinrichtungsgehäuses (6) anliegen.

2. Elektrische Heizvorrichtung nach Anspruch 1, **dadurch gekennzeichnet, dass** das Ausgleichselement (32) ein auf Länge geschnittenes Profilteil ist.

3. Elektrische Heizvorrichtung nach Anspruch 1 oder 2, **dadurch gekennzeichnet, dass** die Außenflächen (42) der Schenkel (36) in einer Querschnittsansicht des U-förmigen Ausgleichselements (32) zumindest abschnittsweise konvex geformt sind.

4. Elektrische Heizvorrichtung nach einem der vorherigen Ansprüche, **dadurch gekennzeichnet, dass** die Außenflächen (42) der Schenkel (36) in einer Querschnittsansicht des U-förmigen Ausgleichselements (32) jeweils zumindest zwei konvexe Wölbungen (52) ausbilden.

5. Elektrische Heizvorrichtung nach einem der vorherigen Ansprüche, **dadurch gekennzeichnet, dass** an der Außenfläche (42) der Schenkel (36) sich quer erstreckende Rillen (54) und dazwischen vorgesehene Vorsprünge (56) versehen sind.

6. Elektrische Heizvorrichtung nach einem der vorherigen Ansprüche, **dadurch gekennzeichnet, dass** der Steg (30) an seiner Außenseite von einem Positioniersteg (44) überragt ist, der linienförmig gegen den Boden (46) des Heizeinrichtungsgehäuses (6) anliegt.

7. Elektrische Heizvorrichtung nach einem der vorherigen Ansprüche, **dadurch gekennzeichnet, dass** zwischen dem Steg (30) und den Innenflächen (38) der Schenkel (36) jeweils ein gegenüber der Innenfläche (38) nach außen vorspringender Freistich (40) ausgebildet ist.

8. Elektrische Heizvorrichtung nach Anspruch 7, **dadurch gekennzeichnet, dass** das PTC-Element (14) in einem Rahmen (22) aufgenommen ist, der die Leitbahnen (16) ausformende Kontaktbleche (18) sowie eine optional an einer Außenseite zumindest eines der Kontaktbleche (18) angeordnete Isolierlage (20) zu einer Einheit fügt, wobei ein unterer Querholm (2) des Rahmens (22) den Freistich (40) überragt.

9. Elektrische Heizvorrichtung nach einem der vorherigen Ansprüche, **dadurch gekennzeichnet, dass** das PTC-Element (14) in einem Rahmen (22) aufgenommen ist, der die Leitbahnen (16) ausformende Kontaktbleche (18) sowie eine optional an einer Außenseite zumindest eines der Kontaktbleche (18) angeordnete Isolierlage (20) zu einer Einheit fügt, wobei ein oberer Querholm (26) des Rahmens (22) die Aufnahmetasche (12) in Richtung auf die Anschlusskammer (10) überragt.

10. Elektrische Heizvorrichtung nach Anspruch 8 oder 9, **dadurch gekennzeichnet, dass** Längsholme (48) des Rahmens (22) das Ausgleichselement (32) zwischen sich aufnehmen.
